Europäisches Patentamt

European Patent Office

Office européen des brevets

(11) Publication number: **0 266 546**
**A1**

# (12) EUROPEAN PATENT APPLICATION

(21) Application number: 87114153.7

(22) Date of filing: 28.09.87

(51) Int. Cl.4 **B60G 21/04** , B60G 11/46 ,
F16F 1/36

(30) Priority: 07.10.86 IT 2191786

(43) Date of publication of application:
11.05.88 Bulletin 88/19

(84) Designated Contracting States:
DE ES FR GB SE

(71) Applicant: PIRELLI ACCESSORI INDUSTRIALI
S.p.A.
Piazzale Cadorna, 5
I-20123 Milan(IT)

(72) Inventor: Ugazio, Pierangelo
Viale Romolo 6
I-40143 Milan(IT)
Inventor: Pham, Anh Tuan
16 Rue De Montoidier
F-78310 Elancourt Paris(FR)
Inventor: Botti, Ubaldo
Via Sporting Mirasole, 47/13
I-20090 Noverasco Milan(IT)

(74) Representative: Mariani, Giorgio, Dr. et al
INDUSTRIE PIRELLI S.p.A. Direzione Brevetti
Piazzale Cadorna, 5
I-20123 Milano(IT)

(54) Device for motor-car suspensions.

(57) A suspension device (13) for motor vehicles, ensures the anti-rolling, suspension, height-adjustment and steering functions by the use of fluid springs, in particular air springs (18) fastened to a U-shaped frame the concavity of which can be upwardly or downwardly directed and to the wings (15) of which are mounted the hubs (12) of the wheels (11), said wings (15) being connected by substantially horizontal arms (16) to the motor vehicle body, while the frome is connected to the motor vehicle body by means (19) counteracting the relative transverse movements between the frame and the body.

Fig.1

## A Suspension Device for Motor Vehicles

The present invention relates to a suspension device for motor vehicles, and particularly to a device ensuring the steering, suspension and height-adjustment of the rear and front trains of motor vehicles, while allowing, at the same time, the use of pneumatic springs as connecting and suspension elements between the train or axle and the body.

It is known that one of the problems in motor vehicle suspension devices consists of the rolling movement of the body; this is one of the reasons for which in known suspension devices using a frame capable of being deformed generally made of drawn and welded sheet steel, an additional anti-rolling bar is applied.

This is also the main reason for which a wider spreading of pneumatic springs in motor vehicle suspensions has been hitherto precluded although these springs have non negligible advantages both as regards their suspension capability and the possibility of readily adjusting the height of the motor vehicle body with respect to the front and rear trains and hence the ground. In fact these springs are provided with too much flexibility.

In conclusion it can be stated that currently known devices have not advantageously solved the three main problems related to motor vehicle suspensions both from the standpoint of their performances and from the standpoint of money saving and industrial feasibility, that is:

a) the suspension and adjustment in height of the body;

b) the steering of the motor vehicle;

c) a substantial reduction in rolling.

In other words, hitherto known devices have solved two of the above mentioned problems at the most.

It is an object of the present invention to provide a device capable of eliminating the outlined problems and drawbacks in a technically and industrially advantageous manner.

This object is achieved by a suspension device characterized in that the wheels or corresponding hubs are mounted on the two parallel and substantially upright wings of a U-shaped frame the transverse side of which is connected to the motor vehicle body by at least a fluid spring and a flat element, said wings being in turn pivoted to the motor vehicle body in a spaced apart location with respect to the hub-fastening points.

In conformity with a preferred embodiment of the invention, said frame comprises a U-shaped portion from the substantially upright wings of which extend two substantially horizontal arms having their ends pivoted to the motor vehicle body, while the wheel-carrying hubs are integral to the two wings, the motor vehicle body being also connected to the transverse and horizontal element of said U-shaped frame by a pair of pneumatic springs and a triangular flexible lamina.

As will become more apparent from the following detailed description given hereinafter with reference to the accompanying drawings, the suspension device according to the invention attains the intended purposes in that:

-the anti-rolling function is ensured by the U-shaped frame which is disposed with its two wings substantially in a vertical position, due to the fact that said frame works under a torsional stress while the transverse side works under a bending stress reacting to the upwardly oriented forces applied to the two ends thereof by the wheels;

-the suspension and height-adjustment functions are carried out in a manner known in itself by the pneumatic springs; and

-the steering function is ensured in a longitudinal direction by the said horizontal arms and in a transverse direction by the flexible lamina connecting the transverse element of the U-shaped frame to the motor vehicle body.

In the accompanying drawings:

-Fig. 1 is a global view of a car on which the device of the invention is mounted;

-Fig. 2 shows the suspension device of the present invention according to an alternative embodiment; and

-Fig. 3 shows a further alternative form of the suspension device in question.

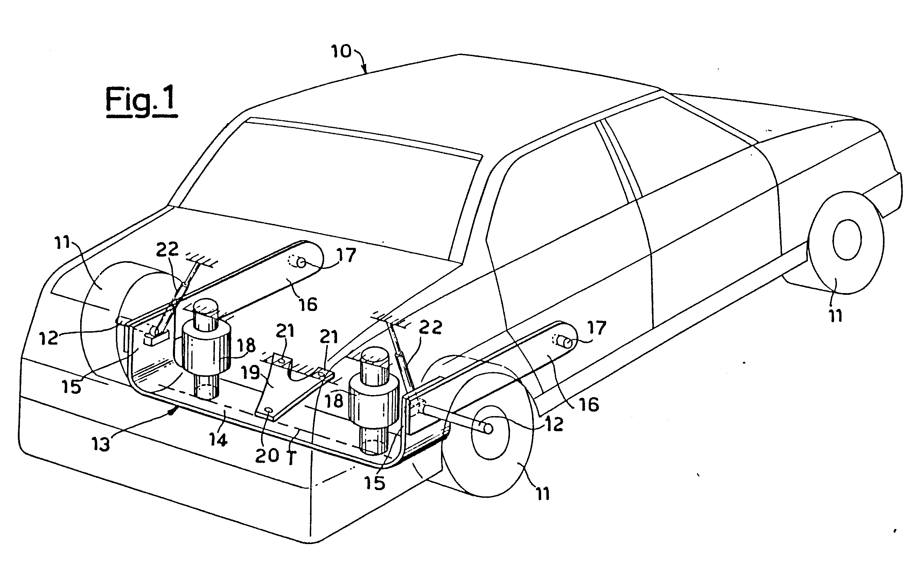

Referring first to Fig. 1, reference numeral 10 generally denotes a car body provided with wheels 11 mounted on hubs identified by the bars 12 and with traditional shock absorbers 22.

In the preferred embodiment, the suspension device, globally and generally identified by reference numeral 13, comprises a channel or U-shaped frame consisting of two vertical and parallel side wings 15 and a connecting element 14. The frame is preferably made of a composite plastic material such as for example a plastic material filled with glass fibers, the plastic material for example being an epoxy resin. Anyway the frame can also be made of other materials, provided that they have suitable mechanical characteristics, such as for example steel.

As it will be recognized from the behaviour modalities of the suspension device, the U-shaped frame must be made of a material capable of resisting to a torsional stress, acting about an axis lying in the plane of the element 14 and at right angles to wings 15 and of resisting to a bending stress, acting upright on the element 14. In fact these features are the ones producing the anti-rolling effect of the suspension device.

Two arms 16 are fixedly fastened to the wings 15 and they extend therefrom in a parallel and substantially horizontal relationship; arms 16 are pivoted at their free ends to the body frame by means of flexible articulated joints diagrammatically shown by reference numeral 17; the articulated joints 17 are preferably made of rubber and metal, in a manner known in itself.

By suitably selecting the characteristics of the articulated joints 17 it is possible to control the connection stiffness in the horizontal direction between suspension and frame in order to ensure an efficient steering function while bringing about an advantageous reduction of the running noise.

The ends of two pneumatic or air springs 18 of known type are fastened to the connecting element 14 the other ends of said springs being secured to the body 10 frame. The fastening operation can be carried out by bolting.

The air springs can also be in the form of a revolving bellows made of elastomer strengthened with a synthetic fiber fabric.

Conventional height-adjusting devices known per se, such as for example those used in industrial vehicles, are associated with the bellows containing air under pressure.

Finally one end 20 of a triangular flexible preferably fork-shaped lamina 19 is fixed to the connecting element 14 the other ends 21 of which are fixed to the car frame, counteracting the relative transverse motions of the frame, and hence the body, with respect to the suspension, and hence the rear train.

It is apparent from the foregoing description that the present invention fulfils all the intended purposes, while meeting all the desired functions. In fact:

a) The U-shaped frame working under a torsional and a bending stress counteracts the body rolling. More specifically the torsional stress develops with respect to the axis defined by the chain dot line T in Fig. 1, while the bending stress is that of element 14, which is vertically and upwardly stressed,symmetrically, in the region of wings 15 and which reacts in the region of attachment of the two pneumatic springs 18.

b) The two air springs ensure both the suspension and the height-adjustment (the latter in a manner known per se). It is clear that air springs can be more generally defined as fluid springs, as other gases or even other fluids can also be used. When a height adjustment is not wished, the pneumatic springs can be replaced with mechanical springs which however have but a suspension function.

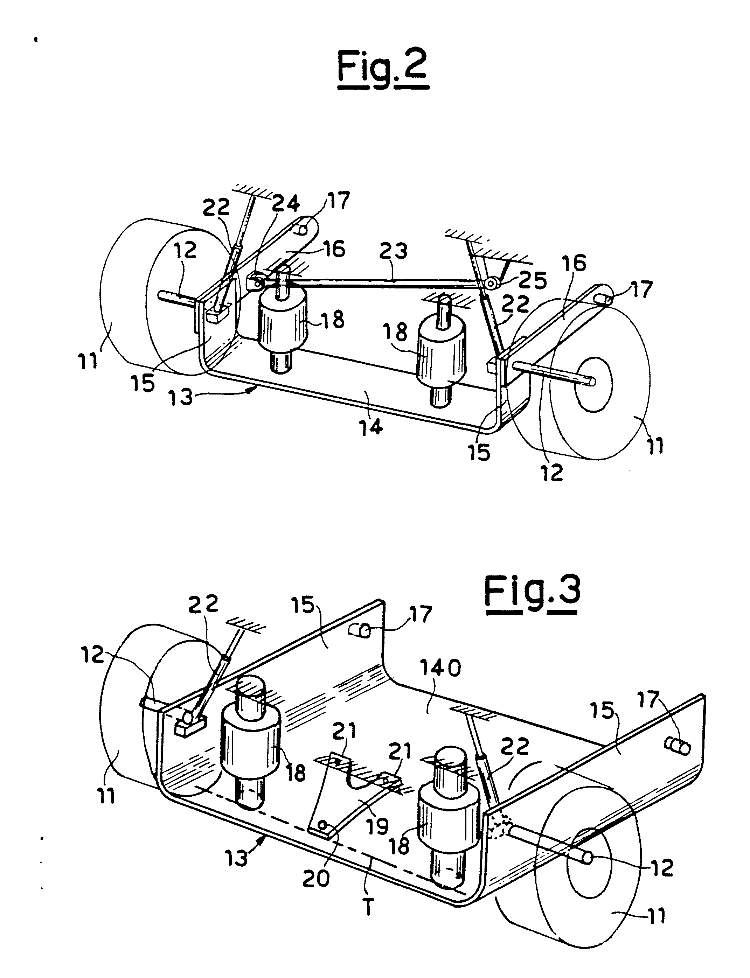

c) The two arms 16 ensure the longitudinal steering whereas the flexible lamina 19 ensures the transverse steering. In the alternative embodiment of Fig. 2, in place of the triangular elastic lamina 19, a retaining connecting rod 17 is provided which is articulated at its two ends 24 and 25 and is of the type already known as "Panhard" connecting rod.

A further embodiment of the device according to the present invention is shown in Fig. 3. It differs from the embodiment of Fig. 1 in that the horizontal arms 16 are an integrating part of the U-shaped frame 140 thus enhancing the longitudinal steering function and the torsional anti-rolling function.

Obviously in this case it will be necessary to choose both the material of the U-shaped frame and the sizes, thickness, etc. of the same keeping into account the required resistance to torsional stress and to bending stress.

In both figures 2 and 3 the same reference numerals as in Fig. 1 have been used for like or corresponding parts.

It is to be noted that in the drawings and in the preceding description the U-shaped frame is shown with its concavity facing upwardly; however the performances of the same remain unchanged if it is mounted with its concavity facing downwardly, provided that the necessary mounting modifications are made to the pneumatic springs. Obviously the choice will depend upon planning and arrangement criteria of the other mechanical parts and of the motor vehicle body.

It is understood that all modifications and variations which are equivalent from a conceptual and mechanical point of view are possible and conceivable without departing from the scope of the invention as defined in the appended claims.

## Claims

1. A suspension device for motor vehicles characterized in that it comprises a U-shaped frame so mounted that its concavity can be directed upwardly or downwardly, to the wings (15) of said U being mounted the hubs (12) of the two wheels (11) while the transverse element (14) is connected to the motor vehicle body (10); at least a fluid spring (18); and an element counteracting the relative transverse movements between the U-shaped frame and the body, saind wings (15) being in turn pivoted to the motor vehicle body at spaced apart locations with respect to the mounting points of the hubs.

2. A device according to claim 1, characterized in that said wings (15) are pivoted to said body (10) through substantially horizontal respective arms (16) fixedly integral to the corresponding wing, the pivoting being carried out by means of flexible articulated joints (17).

3. A device according to claim 1, characterized in that said at least one fluid spring (18) is provided with means known per se designed to adjust the height of the spring itself.

4. A device according to claim 3, characterized in that it comprises two air springs (18) symmetrically mounted with respect to the center line of the body.

5. A device according to claim 1, characterized in that said counteracting element consists of a triangular elastic lamina (19) one vertex (20) of which is fastened to said transverse element (14) and the two other vertices (21) are fastened to the motor vehicle body.

6. A device according to claim 1, characterized in that said counteracting element consists of a rigid connecting rod (23) the ends (24, 25) of which are connected to one wing of the frame and to the body respectively, by elastic articulated joints.

7. A device according to claim 1, characterized in that said U-shaped frame is made of strengthened plastic material .

8. A device according to claim 7, characterized in that said strengthened plastic material is a plastic material filled with glass fibers.

9. A device according to claim 1, characterized in that said U-shaped frame is made of steel.

Fig.1

# Fig.2

# Fig.3

European Patent Office

**EUROPEAN SEARCH REPORT**

Application Number

EP 87 11 4153

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 313 618 (R. RUBINSON) <br> * Abstract; figures 3,4 * | 1,9 | B 60 G 21/04 <br> B 60 G 11/46 <br> F 16 F 1/36 |
| A | WO-A-8 600 854 (G.K.N.) <br> * Whole document * | 1,2,7 | |
| A | EP-A-0 152 914 (NISSAN MOTOR CO. LTD) <br> * Page 4, line 24 - page 5, line 29; figure 2 * | 1,3,4 | |
| A | DE-A-1 170 257 (A. OPEL AG) <br> * Figure 1 * | 1 | |
| A | PATENT ABSTRACTS OF JAPAN, vol. 7, no. 223 (M-247)[1368], 4th October 1983; & JP-A-58 118 342 (HINO JIDOSHA KOGYO K.K.) 14-07-1983 | 8 | |

| | |
|---|---|
| | TECHNICAL FIELDS SEARCHED (Int. Cl.4) |
| | B 60 G <br> F 16 F |

The present search report has been drawn up for all claims

| Place of search | Date of completion of the search | Examiner |
|---|---|---|
| THE HAGUE | 13-01-1988 | LINTZ C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)